Europäisches Patentamt

**European Patent Office**

**Office européen des brevets**

(11) Publication number: **0 232 818**
A2

# (12) EUROPEAN PATENT APPLICATION

(21) Application number: **87101322.3**

(22) Date of filing: **30.01.87**

(51) Int. Cl.⁴: **B 65 D 5/06,** B 65 D 65/40,
B 32 B 27/10

(30) Priority: **14.02.86 US 829248**

(71) Applicant: **EX-CELL-O CORPORATION, 2855 Coolidge Highway, Troy Michigan 48084 (US)**

(43) Date of publication of application: **19.08.87 Bulletin 87/34**

(72) Inventor: **Joosten, Richard L., 6226 Carpathian Court, West Bloomfield Michigan 48033 (US)**

(74) Representative: **Hoeger, Stellrecht & Partner, Uhlandstrasse 14c, D-7000 Stuttgart 1 (DE)**

(84) Designated Contracting States: **BE DE GB IT SE**

(54) **Laminated paperboard container and blank for constructing same.**

(57) There is disclosed a heat sealable container for fruit juices, and a blank for constructing same, having a laminated wall construction of suitable oxygen and ultra violet light ray resistant barriers or layers which are compatible with one another insofar as bonding and sealing are concerned. Such wall construction includes a suitable central bulk layer such as kraft paperboard, foamed thermoplastic sheet, synthetic paperboard, or composite paperboard, with an outer layer of modified polyethylene, an adjacent inner layer of a suitable polyester, and an innermost layer of polyvinylidene chloride.

LAMINATED PAPERBOARD CONTAINER
AND BLANK FOR CONSTRUCTING SAME

## Technical Field

This invention relates generally to paperboard containers and, more particularly to a laminated wall construction for same, including oxygen and ultra violet light ray resistant barriers or layers.

## Background Art

Various industries have found that central packaging for distant markets is a beneficial approach in their business activity and can assist them in developing strong market bases. With the increased emphasis on volume producing and marketing, many centers of population in reference to a product market base may extend across international boundaries. Thus, out of both necessity and convenience, situations have developed where essential production marketing areas extend across vast market areas. Hence, longer shelf life for difficult to contain liquids, such as fruit juices and products, is needed so that producers and suppliers can provide uniform top quality merchandise throughout their areas of distribution.

It is well known to include a layer of aluminum foil, which generally serves as a means of preventing oxygen and ultra violet light rays from penetrating through the walls of a paperboard container when the latter contains fruit juices. However, aluminum as a barrier is expensive and subject to cracking at score lines.

It is also well known to coat the barrier layer with a heat-sealable material, such as low density polyethylene. Such a coating tends to scavenge flavor essences and aromas from various fruit juices.

## Disclosure of the Invention

In view of the above described characteristics of aluminum and low density polyethylene, a general object of the invention is to provide an improved, economical paperboard container which is capable of improving the shelf life of fruit juices.

Another object of the invention is to provide a container having an improved wall construction of suitable alternate barriers or layers which avoid the above described negative characteristics, and which are compatible with one another insofar as bonding and sealing are concerned.

A further object of the invention is to provide a paperboard container for retaining flavors and aromas, while efficiently preventing the penetration of oxygen, wherein the wall construction includes a suitable combination of layers of polyethylene, polyester and polyvinylidene chloride.

Still another object of the invention is to provide such a container wherein the polyester is a polyethylene terapthalate.

## Brief Description of Drawings

Figure 1 is a layout view of the outside surface of a container blank body, to which the present invention could be adapted;

Figure 2 is a flat side seamed blank made from the container blank shown in Figure 1, and showing the outside surface thereof;

Figure 3 is a perspective view of a container fabricated from the blanks shown in Figures 1 and 2;

Figure 4 is a fragmentary cross-sectional view through a side panel taken on line 4-4 of Figure 3, and looking in the direction of the arrows; and

Figures 5 and 6 are figures similar to Figure 4, showing alternate embodiments of the invention.

### Best Mode of Carrying Out the Invention

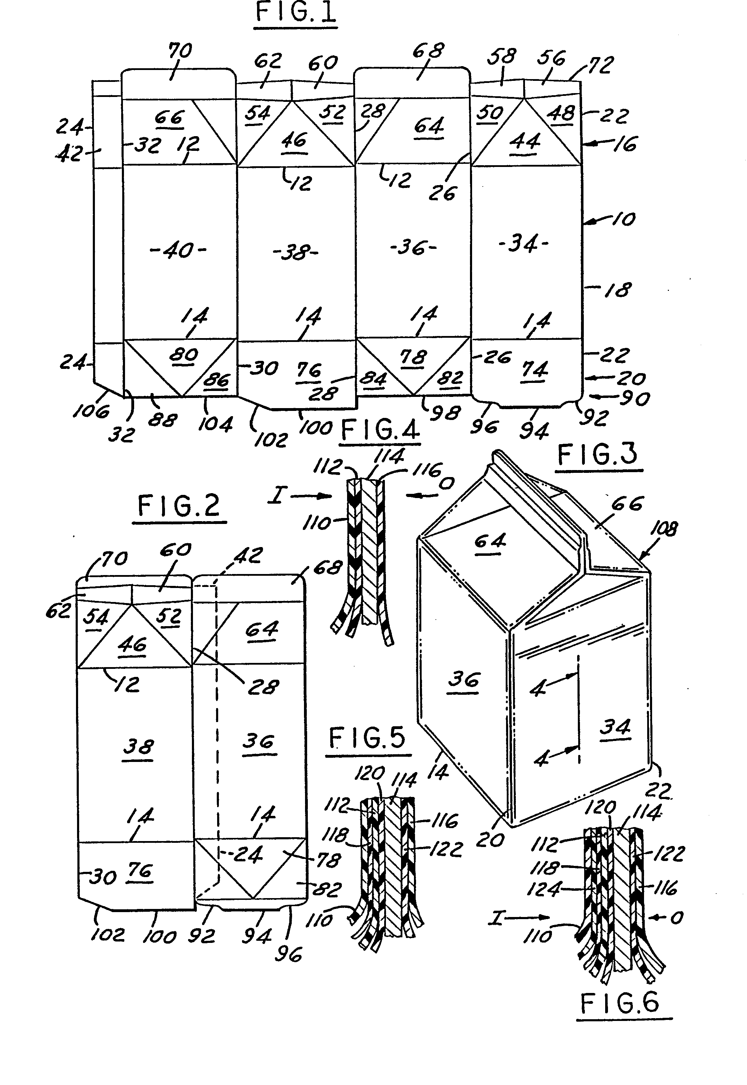

Referring now to the drawings in greater detail, Figure 1 illustrates the outside surface of a container blank 10. The container blank 10 is separated into three general groups by staggered score lines 12 and 14. The group above staggered score line 12 is referred to as top closure group 16. The group between staggered score lines 12 and 14 are referred to as body group 18. The group below staggered score line 14 is referred to as bottom closure group 20. The container blank 10 is defined on its sides by side edges 22 and 24 and is separated vertically by a series of score lines 26, 28, 30 and 32. The score lines 26, 28, 30 and 32 divide the group body 18 into side wall panels 34, 36, 38 and 40 and side seam flap 42.

The top closure group 16 is mounted on the upper end of body group 18. Triangular end panels 44 and 46 are mounted to upper ends of the side wall panels 34 and 38, respectively. The triangular end panel 44 has a pair of adjacent fold-back panels 48 and 50 mounted on its upper sides and the triangular end panel 46 has a pair of fold-back end panels 52 and 54 mounted on its upper sides. A pair of inner rib panels 56 and 58 are mounted adjacent the fold-back panels 48 and 50, respectively. A pair of inner rib panels 60 and 62 are mounted adjacent the fold-back panels 52 and 54, respectively.

A pair of roof panels 64 and 66 are mounted to the body group 18 at the upper end of the side wall panels 36 and 40, respectively. A top edge member 72 defines the upper free end of top closure group 16. A complete description of the top closure group 16 is not necessary to understand the principles of the present invention. However, reference is made to U.S. Patent 3,270,940 which issued September 6, 1966 for a complete description of a top closure group similar to top closure group 16.

The bottom closure group 20 is mounted on the lower end of body group 18. A tuck-in flap 74 and a fold-over flap 76 are mounted at the lower ends of the side wall panels 34 and 38, respectively, along the staggered score line 14.

A first minor flap 78 and second minor flap 80 are mounted at the bottom of the side wall panels 36 and 40, respectively, along the staggered score line 14. A pair of fold-back panels 82 and 84 connect the first minor flap 78 to the tuck-in flap 74 and the fold-over flap 76, respectively. The second minor flap 80 is connected to the fold-over flap 76 and the side seam flap 42 by fold-back panels 86 and 88, respectively.

A bottom edge member 90 defines the free end of the bottom closure group 20. The bottom edge member 90 is substantially defined by three sections at the bottom edge of the tuck-in flap 74. These three sections or portions are defined by a cam edge 92, a straight edge 94 and a cam edge 96. The bottom edge member 90 is defined as an edge portion 98 along the free edge of fold-back panels 82 and 84. The fold-over panel 76 has its bottom edge member 90 defined by a free edge portion which is substantially an extension of the score line 28, a straight edge 100 and a diagonal edge 102. The free edge portion of the fold-back panels 86 and 88 is defined by an edge portion 104. The side seam flap 42 has its portion of the bottom edge member 90 defined by a diagonal edge 106.

When the container blank 10 is being prepared for assembly as a container it will be side seamed by having the roof panel 66, the side wall panel 40 and the second minor flap 80 and its associated fold-back panels 86 and 88 along with the side seam flap 42 folded about the score line 30 moving their inside surfaces into contact with the inside surfaces of the triangular end panel 46, the side wall panel 38 and the fold-over flap 76 and the side seam flap 42's inside surface extending past the score line 28.

The triangular end panel 44, the side wall panel 34 and the tuck-in flap 74 will be rotated about the score line 26 so their inside surfaces will move toward the inside surface of the roof panel 64, the side wall panel 36 and the first minor flap 78 and the fold-back panels 82 and 84. The side edge 22 will then be substantially aligned with the score line 32 and its associated edge portion will be aligned with and in contact with the outside surface of the side seam flap 42. The outside surface of side seam flap 42 is secured to the inside surface of the various panel and flap members being positioned along the side edge 22. This can be accomplished in many ways. One of the preferred methods is heat sealing which will establish a surface bond between the above stated members. The container blank 10 can then be opened into tubular form as illustrated in Figure 3 as a tubular container member 108.

In normal production operations the bottom closure group 20 will be closed and sealed, the contents will be passed into the tubular container member 108 and then the top closure group 16 will be closed, as illustrated in Figure 3.

The forming of the side seam blank and the closing of the top closure group is covered in detail in the above mentioned U.S. Patent 3,270,940. The diagonal edge 106 and the diagonal edge 102 are provided so that when the container is constructed there will not be an extra layer of paper as the fold-over flap 76 will not extend over the side seam flap 42 when the bottom closure group 20 is in constructed form. This is covered in detail in U.S. Patent Nos. 3,120,335 and 4,341,340.

Referring now to Figure 4, wherein a cross-sectional view of the wall of the container wall is represented, an arrow I identifies the inside surface of the container 108, and an arrow O identifies the outside surface of the container 108. The identification of the progressive layers from the inside to the outside is a follows. A uniform layer 110 consists of a suitable polyvinylidene chloride with heat sealable characteristics. A layer 112 consists of a suitable polyester, such as polyethylene terapthalate. The next layer 114 is is the bulk or main body layer, which may consist of a kraft paperboard, foam plastics, a synthetic paperboard, or a composite paperboard. The outside layer 116 is a modified polyethylene, e.g., a polyethylene which will bond to polyvinylidene chloride.

Figure 4 is not drawn to scale, and the following are examples of ranges of thicknesses of the respective layers which could be used in a practical embodiment of a container in accordance to the invention:

layer 110 =   .0003" - .0007" (.005" preferred)

layer 112 =   .001"  - .002"  (.0015" preferred)

layer 114 =   .0123" - .0254" (varies with container size)

layer 116 =   .0005" - .001"  (.00075" preferred)

The thickness range for the layer 114 applies to the range of standard container sizes, i.e., half pint, pint, quart, half gallon, and gallon. For the popular half gallon size, for example, the preferred thickness is .022", with a recommended range of .020" - .024".

As may be understood from Figure 5, optional alternate arrangements are possible. For example, tie layers 118,120 and 122 of suitable adhesives, such as ethylene copolymers, may be used between the layers 110/112, 112/114, and 114/116, respectively. In some instances, it may be desirable to utilize a layer 124 (Figure 6) of a different grade of polyvinylidene chloride between the layers 110/118 to improve barrier performance. The thickness range for the layer 124 is .0003" - .0007", with .0005" preferred.

Along with the inclusion of the above described special layers, it may be beneficial for the inner cut edges to be either "skived" or folded-over by some one of several known methods, such as that shown and described in U.S. Patent No. 4,254,693, resulting in a carton edge structure, as shown in U.S. Patent No. 4,239,150.

## Industrial Applicability

It should be apparent that the invention provides an improved paperboard package for carrying fruit juices.

It should also be apparent that the respective layers of materials described above may be varied in thickness independently of the other layers to suit particular liquid packaging applications.

While but three general embodiments of the invention have been shown and described, other modifications thereof are possible within the scope of the following claims.

0232818

The embodiments of the invention in which an exclusive property or privilege is claimed are defined as follows:

1. A one-piece foldable, laminated blank for forming a sealed liquid container, said blank comprising:

(a) a layer of bulk material having a predetermined thickness;

(b) a layer of a modified polyethylene having a predetermined thickness and forming a uniform coating on the outer surface of said layer of bulk material;

(c) a layer of a suitable polyester having a predetermined thickness and secured to the inner surface of said layer of bulk material; and

(d) a layer of polyvinylidene chloride having a predetermined thickness and forming a uniform outer coating on said layer of polyester.

2. The laminated blank described in claim 1, wherein said layer of bulk material is from .0123" to .0254" thick.

3. The laminated blank described in claim 2, wherein said bulk material is one of kraft paperboard, foam plastics, synthetic paperboard, and composite paperboard.

4. The laminated blank described in claim 1, wherein said layer of bulk material is the order of .022 inches thick.

5. The laminated blank described in claim 1, wherein said first layer of a modified polyethylene is between .0005" and .001" thick.

6. The laminated blank described in claim 1, wherein said layer of polyester is between .001" and .002" thick.

7. The laminated blank described in claim 6, wherein said layer of polyester consists of polyethylene terapthalate.

8. The laminated blank described in claim 1, wherein said layer of polyvinylidene chloride is between .0003" and .0007" thick.

9. The laminated blank described in claim 1, wherein said layer of polyvinylidene chloride has heat sealable characteristics.

10. The laminated blank described in claim 1, and a tie layer of a suitable adhesive having a predetermined thickness between each of the adjacent layers of polyvinylidene chloride and polyester, polyester and bulk material, and bulk material and modified polyethylene.

11. The laminated blank described in claim 10, wherein said layer of suitable adhesive consists of an ethylene copolymer.

12. A one-piece foldable, laminated blank for forming a sealed liquid container, said blank comprising:

(a) a layer of kraft paperboard material on the order of .022 inches thick.

(b) first layer of modified polyethylene on the order of .00075 inches thick forming a uniform coating on one surface of said layer of kraft paperboard material;

(c) a second layer of polyethylene terapthalate on the order of .0015 inches thick formed uniformly on the other surface of said layer of kraft paperboard material; and

(d) a layer of polyvinylidene chloride .0005" thick secured to said layer of polyethylene terapthalate.

13. The laminated blank described in claim 12, and a layer of a different grade of polyvinylidene chloride forming a uniform coating between the layers polyvinylidene chloride and polyethylene terapthalate.

14. An oil, grease, and solvent resistant, heat-sealed container formed from a one-piece foldable laminated blank of sheet material, said container comprising four side wall panels forming a tubular body of rectangular cross section having a fold-in top closure and a fold-in bottom closure; said sheet material comprising first and second thicknesses of polyethylene terapthalate and heat-sealable modified poly- ethylene thermally bonded to opposite sides of a third thickness of paperboard, and a fourth thickness of polyvinylidene chloride bonded to said thickness of polyethylene terapthalate.

15. An oil, grease, and solvent resistant, heat-sealed container formed from a one-piece foldable laminated blank of paperboard, said container comprising:

(a) four side wall panels forming a tubular body of rectangular cross section having fold-in top and bottom closures;

(b) said container being formed from paperboard having a thickness on the order of .022 inches and thermally bonded between an outer layer of a modified polyethylene on the order of .00075"

11

0232818

thick, and an inner layer of polyethylene terapthalate on the order of .0015" thick; and

(c) a layer of polyvinylidene chloride on the order of .0005" thick secured to said inner layer of polyethylene terapthalate.

16. The container described in claim 15, wherein the range of the layer of paperboard is .0123"-.0254" thickness, the range of the layer of modified polyethylene is .0005"-.001 thickness; the range of the polyethylene terapthalate is .001"-.002" thickness; and of polyvinylidene chloride is .0003"-.0007" thickness.

0232818

FIG.1

FIG.4

FIG.2

FIG.3

FIG.5

FIG.6